# EUROPÄISCHE PATENTSCHRIFT

(11) **EP 1 922 562 B1**
(45) Veröffentlichungstag und Bekanntmachung des Hinweises auf die Patenterteilung: **23.03.2011**
(21) Anmeldenummer: 06776060.3
(22) Anmeldetag: 20.06.2006
(51) Int. Cl.: G01S 13/44, G01S 13/93, H01Q 25/02

(54) **KRAFTFAHRZEUG-RADARSYSTEM MIT HORIZONTALER UND VERTIKALER AUFLÖSUNG**
MOTOR VEHICLE RADAR SYSTEM COMPRISING HORIZONTAL AND VERTICAL RESOLUTION
SYSTEME RADAR POUR UN VEHICULE A MOTEUR, A RESOLUTION HORIZONTALE ET VERTICALE

(30) Priorität: 05.09.2005 DE 102005042729
(43) Veröffentlichungstag der Anmeldung: 21.05.2008
(73) Patentinhaber: Valeo Schalter und Sensoren GmbH, 74321 Bietigheim-Bissingen (DE)
(72) Erfinder: HABERLAND, Udo, 71088 Holzgerlingen (DE)
(86) Internationale Anmeldenummer: PCT/EP2006/005873
(87) Internationale Veröffentlichungsnummer: WO 2007/028433

(56) Entgegenhaltungen:
- EP-A- 0 947 852
- WO-A-2004/051308
- JP-A- 7 038 332
- US-A- 3 176 297
- US-A- 5 815 112
- US-B1- 6 266 005
- US-B1- 6 377 205
- US-B1- 6 404 328
- SANJAY RAMAN ET AL: "A W-Band Dielectric-Lens-Based Integrated Monopulse Radar Receiver" IEEE TRANSACTIONS ON MICROWAVE THEORY AND TECHNIQUES, IEEE SERVICE CENTER, PISCATAWAY, NJ, US, Bd. 46, Nr. 12, Dezember 1998 (1998-12), XP011037428 ISSN: 0018-9480
- QIAN Y ET AL: "Reconfigurable leaky-mode/multifunction patch antenna structure" ELECTRONICS LETTERS, IEE STEVENAGE, GB, Bd. 35, Nr. 2, 21. Januar 1999 (1999-01-21), Seiten 104-105, XP006011679 ISSN: 0013-5194

## Beschreibung

Die Erfindung betrifft ein Kraftfahrzeug-Radarsystem nach dem Oberbegriff des Anspruchs 1. Ein solches Radarsystem ist aus der EP-A-0 947 852 bekannt. Die Erfindung betrifft ferner ein Betriebsverfahren für ein solches Radarsystem.

Dabei wird unter einer Richtcharakteristik einer Sendeantennenstruktur eine räumliche Verteilung der abgestrahlten Energie verstanden. Analog ergibt sich wegen des Reziprozitäts-Prinzips die Richtcharakteristik einer Empfangsantennenstruktur als räumliche Verteilung der empfangenen Energie, also als Zuordnung empfangene Energie zu bestimmten räumlichen Positionen. Eine solche Richtcharakteristik wird im Folgenden auch als Keule (Sendekeule oder Empfangskeule) bezeichnet.

Die erste Raumrichtung entspricht zum Beispiel einer Richtung einer Querachse des Kraftfahrzeugs und die zweite Raumrichtung entspricht zum Beispiel einer Fahrtrichtung des Kraftfahrzeugs oder der Richtung seiner Längsachse.

Bei Kraftfahrzeugen werden Radarsysteme zur Überwachung der Fahrzeugumgebung eingesetzt, wobei Anwendungen wie Einparkhilfe, Totwinkelüberwachung, Spurwechselassistenz, Türöffnungsassistenz, eine Umfall-Antizipierung (pre-crashsensing) für eine Airbag-Auslösung, Gurtstraffung, Überrollbügel-Aktivierung, Start/Stopp-Betrieb oder Fahrbetrieb mit Abstandsüberwachung und/oder Abstandsregelung (Cruise control-Unterstützung) in Frage kommen.

Die zwei Antennenstrukturen erlauben zusammen mit ihrer Anordnung eine Erfassung von Winkelpositionen reflektierender Objekte im horizontalen Sichtfeld des Radarsystems durch eine Auswertung einer Phasendifferenz von Signalen, die von den Antennenstrukturen empfangen werden. Dieses Verfahren ist auch als Monopulse-Phasendifferenz-Verfahren bekannt und wird in der US 5 815 112 auch zur Verwendung bei Kraftfahrzeugen verwendet. Die dort vorgeschlagenen Empfangsstrukturen weisen mehrere Reihen von Antennenstrukturen auf, die in ihrer Einbaulage im Kraftfahrzeug im Wesentlichen in vertikaler Richtung verlaufen und in Richtung der Fahrzeug-Querachse durch Abstände voneinander getrennt sind. Durch Ab- und Zuschalten einzelner Teilstrukturen kann eine Empfangsstruktur mit variablen Eigenschaften gebildet werden. Nachteilig ist jedoch, dass dieser Sensor zur Erfassung von vertikalen Winkellagen und/oder Ausdehnungen von Objekten nicht geeignet ist und bedingt durch die Vielzahl von Antennenstrukturen verhältnismäßig groß ist, was dem unauffälligen Einbau in einem Kraftfahrzeug abträglich ist.

Im Umfeld von Kraftfahrzeugen sind typischerweise mehrere Objekte (Fahrzeuge, Leitplanken, Kanaldeckel, Brücken) vorhanden. Um dem Fahrer oder einem Fahrerassistenzsystem eine Einschätzung der Situation zu ermöglichen, ist eine Unterdrückung von Infrastruktur-Objekten, also zum Beispiel von ortsfesten Objekten wie Kanaldeckeln oder Brücken hilfreich oder sogar notwendig.

Um zuverlässig feststellen zu können, ob ein Objekt den Weg eines Kraftfahrzeugs blockiert oder nicht, ist eine Erfassung, die nur auf die horizontale Winkellage gerichtet ist, vielfach nicht ausreichend. Informationen über vertikale Positionen von Objekten sind notwendig, um beurteilen zu können, ob ein Objekt überfahren werden kann (z.B. Gullideckel, Schienen), unterfahren werden kann (Schilderbrücke, Tunneldach etc) oder eine mögliche Kollisionsgefahr (Fahrzeug, Person, Infrastruktur) darstellt. Es ist insbesondere wünschenswert, Objekte wie Kanaldeckel, Brücken oder an Brücken angeordnete Hinweisschilder oder - tafeln erfassen zu können und als Objekt bewerten zu können, das nicht im Weg des Kraftfahrzeugs liegt.

Aus der US 6 404 328 B1 und aus der US 6 377 205 B1 ist in diesem Zusammenhang jeweils ein Verfahren bekannt, das Schwankungen von Amplituden von Radarsignalen zur Bestimmung vertikaler Winkellagen erfasst und auswertet. Zur Erfassung von vertikalen Winkellagen oder Ausdehnungen von Objekten ist aus der US 6,266,005 B1 eine Auswertung eines Interferenzmusters bekannt, das durch Überlagerung eines abgestrahlten Wellenfeldes mit einem abgestrahltem und an einer Fahrbahn reflektierten Wellenfeld entsteht. Der Vorteil dieses Verfahrens soll darin bestehen, dass ein System genutzt werden kann, das auch eine Erfassung einer horizontalen Winkelposition erlaubt.

Dieses Verfahren benötigt eine vergleichsweise hohe Rechenleistung. Es ist darüber hinaus zweifelhaft, ob das Verfahren hinreichend zuverlässig bei hohen Anforderungen an seine Genauigkeit arbeitet.

Vor diesem Hintergrund besteht die Aufgabe der Erfindung in der Angabe eines Kraftfahrzeug-Radarsystems, dass bei kompakten Abmessungen des Kraftfahrzeug-Radarsystems eine genaue Bestimmung der vertikalen Winkellage und/oder Ausdehnung eines Objekts sowie eine genaue Bestimmung einer horizontalen Winkellage in der Umgebung eines Kraftfahrzeugs erlaubt.

Diese Aufgabe wird bei einem Kraftfahrzeug-Radarsystem durch die Merkmale der unabhängigen Ansprüche.

Im Folgenden wird die Erfindung in Verbindung mit Empfangsantennenstrukturen betrachtet. Aufgrund des Reziprozitätsprinzips ergeben sich analoge Vorteile jedoch auch in Verbindung mit Sendeantennenstrukturen.

Unterschiedliche Richtcharakteristiken haben zur Folge, dass aus einem gleichen Raumwinkelelement von einem Objekt reflektierte Radarstrahlung zu unterschiedlich starken Radarechos und damit zu unterschiedlich starken Empfangssignalamplituden in den beiden Antennenstrukturen führt. Die unterschiedlichen Amplituden erlauben die Bestimmung der Elevation, also einer vertikalen Winkelposition.

Für die Auswertung von Phasendifferenzen spielen die unterschiedlichen Richtcharakteristiken dagegen keine Rolle, so dass Phasendifferenzen nach wie vor nach dem Monopuls-Phasendifferenz-Verfahren zur Bestimmung eines Azimutwinkels, also einer horizontalen Winkelposition, verwendet werden.

Die Erfindung erlaubt damit zum Beispiel eine zeitlich parallel mit den gleichen Antennenstrukturen erfolgende Bestimmung von horizontalen Winkelpositionen (Azimutwinkeln) und vertikalen Winkelpositionen (Elevation) von Objekten. Darüber hinaus lassen sich vertikale und horizontale Ausdehnungen der Objekte bestimmen.

Die Ermittlung mit Hilfe der Phasendifferenzmethode liefert damit zum Beispiel azimutale Winkelpositionen von sämtlichen reflektierenden Objekten vor einem Fahrzeug. Mit Hilfe der auf einer Amplitudenauswertung basierenden Bestimmung der Elevation der Objekte können dann Objekte wie Brücken oder Kanaldeckel, die sich oberhalb oder unterhalb eines Fahrweges eines Kraftfahrzeugs befinden, als unkritische Objekte erkannt werden. Dadurch wird zum Beispiel die Zuverlässigkeit und der Komfort einer auf Radarsignalen basierenden Abstandsregelung wesentlich verbessert.

Eine bevorzugte Ausgestaltung zeichnet sich dadurch aus, dass die wenigstens zwei Richtcharakteristiken in der dritten Raumrichtung unterschiedlich breit sind.

Bevorzugt ist auch, dass die wenigstens zwei Richtcharakteristiken unterschiedlich gerichtet sind.

Beide Alternativen stellen unterschiedliche Möglichkeiten zur Erzeugung unterschiedlicher Amplituden für eine bestimmte Ortskoordinate dar.

Eine weitere bevorzugte Ausgestaltung zeichnet sich durch eine Kombination unterschiedlich breiter und unterschiedlich gerichteter Richtcharakteristiken oder Keulen aus.

Durch diese Kombination ergibt sich ein zusätzlicher Freiheitsgrad beim Entwurf des Radarsystems.

Bevorzugt ist auch, dass zwischen einzelnen Elementen der Antennenstrukturen und einer Auswerteschaltung des Radarsystems Laufzeitglieder angeordnet sind, die eine unterschiedliche Richtung der Richtcharakteristiken bewirken.

Durch solche Laufzeitglieder kann eine unterschiedliche Richtung auf schaltungstechnisch einfache Weise fest vorgegeben werden. Es ist ein weiterer Vorteil der Erfindung, dass sie sich mit Hilfe solcher Laufzeitglieder realisieren lässt und zum Beispiel keine Schalter zum Umschalten von Strahlrichtungen erfordert.

Eine weitere bevorzugte Ausgestaltung sieht vor, dass sich die unterschiedlichen Richtcharakteristiken überlappen.

Durch die Überlappüng wird ein Bereich erzeugt, der von beiden Keulen abgedeckt wird, wobei jede der beiden Keulen eine unterschiedliche Amplitude für ein Objekt im Überlappungsbereich liefert. Aus einer Relation dieser Amplituden lässt sich die Elevation mit vergleichsweise hoher Genauigkeit bestimmen. Die vergleichsweise hohe Genauigkeit ergibt sich dabei daraus, dass jeweils eine der Amplituden gewissermaßen eine Normierungsgröße für die andere Amplitude darstellt. Für Objekte, die nur in einer Keule, nicht aber in dem Überlappungsbereich liegen, lässt sich mit entsprechend geringerer Genauigkeit auf eben die mit dieser Position verbundene Elevation zurückschließen.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: ein Kraftfahrzeug mit verschiedenen Raumrichtungen, die durch ein als Beispiel einer Richtungsdefinition dienendes Koordinatensystem vorgegeben werden;
- Fig. 2: ein Ausführungsbeispiel eines erfindungsgemäßen Radarsystems;
- Fig.2a: eine Ausgestaltung einer Antennenstruktur aus Fig. 2;
- Fig. 3: eine Draufsicht auf das Ausführungsbeispiel der Fig. 2 zur Erläuterung einer Phasendifferenz-Methode;
- Fig. 4: Richtcharakteristiken von Antennenstrukturen, die sich in ihrer Ausrichtung voneinander unterscheiden; und
- Fig. 5: unterschiedlich breite Richtcharakteristiken oder Keulen von Antennenstrukturen.

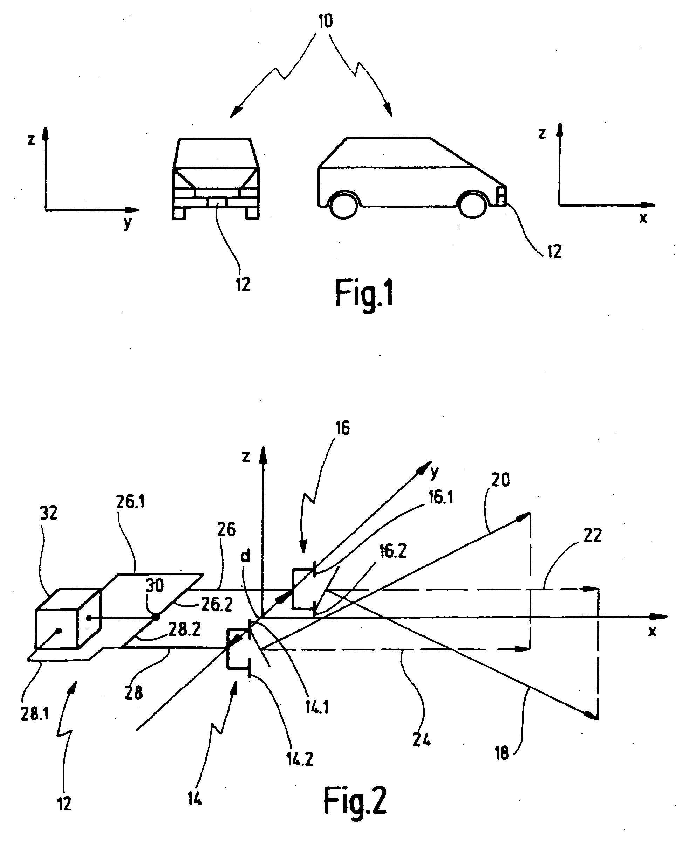

Im Einzelnen zeigt die Figur 1 ein Kraftfahrzeug 10 sowohl in einer Vorderansicht als auch in einer Seitenansicht zusammen mit einem Koordinatensystem, das eine erste Raumrichtung y, eine zweite Raumrichtung x und eine dritte Raumrichtung z definiert. In dem Beispiel der Figur 1 weist die erste Raumrichtung y in Richtung einer Querachse des Kraftfahrzeugs 10, während die zweite Raumrichtung x in Richtung einer Längsachse des Kraftfahrzeugs 10 und die dritte Raumrichtung z in Richtung einer Hochachse des Kraftfahrzeugs 10 verläuft. Es sind jedoch auch andere Festlegungen von Raumrichtungen möglich. In jedem Fall soll ein resultierendes dreidimensionales Koordinatensystem mit dem Kraftfahrzeug 10 verbunden sein.

Das Kraftfahrzeug 10 weist ein Kraftfahrzeug-Radarsystem 12 auf, das in einen vorderen Bereich des Kraftfahrzeugs 10 eingebaut ist und Objekte vor dem Kraftfahrzeug 10 erfasst. Die Lage eines Objektes vor dem Kraftfahrzeug 10 ist in räumlichen Polarkoordinaten durch Angabe eines AzimutWinkels, eines Elevationswinkels und einer Entfernung charakterisierbar. Dabei liegen die Azimut-Winkel in der Ebene der zweiten Raumrichtung und der ersten Raumrichtung (x, y-Ebene), wobei der zweiten Raumrichtung x z. B. der Azimut-Winkel 0 zugeordnet ist. Entsprechend ergibt sich ein Elevationswinkel von 0 Grad für Objekte, die in der x, y-Ebene liegen, und 90 Grad für Objekte, die vertikal in der Hochachse (z-Richtung) über dem Radarsystem 12 liegen.

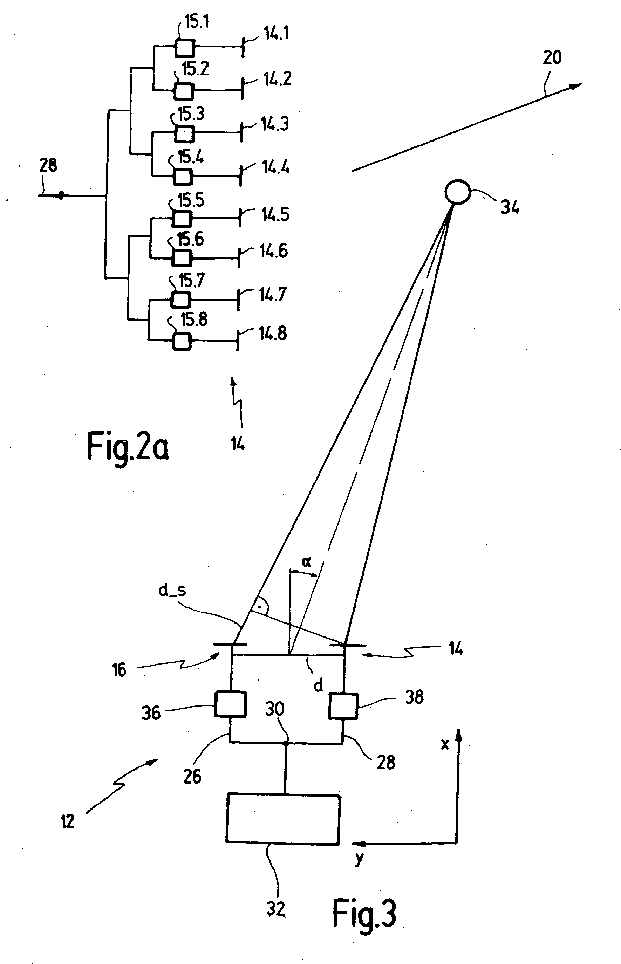

Ein Ausführungsbeispiel eines Radarsystems 12 mit Merkmalen der Erfindung ist in der Figur 2 dargestellt. Das Radarsystem 12 weist wenigstens eine erste Antennenstruktur 14 und eine zweite Antennenstruktur 16 auf, die in der ersten Raumrichtung y in einem vorbestimmten Abstand d voneinander angeordnet sind. Aufgrund des Abstands d kann mit einer solchen Anordnung und unter Verwendung eines Monopuls-Phasendifferenz-Verfahrens der horizontale Winkel (Azimut-Winkel), also der Winkel in der Ebene der ersten und der zweiten Raumrichtung bestimmt werden.

Der Abstand d beträgt typischerweise das 0,5-fache bis 2,5-fache der Wellenlänge der verwendeten Radarstrahlung. Wellenlängen aus diesem Bereich führen zu einer ausreichend hohen Auflösung getrennter Objekte im Radarbild, erlauben also eine Unterscheidung der Winkellagen verschiedener Objekte voneinander. Bei Verwendung einer Frequenz von 24 GHz ergibt sich dann für den Abstand der Antennenstrukturen ein Wert von 0,625 bis 3,125 cm, um in horizontaler Winkellage eine gute Auflösung zu erzielen.

Die Entfernung kann zum Beispiel mit einem FMCW-Verfahren (FMCW = frequency modulated continuous wave) bestimmt werden. Alternativ sind jedoch auch andere Methoden wie Pulsradar, FSK, LFMSK, usw. möglich.

Die Antennenstrukturen 14, 16 sind bevorzugt parallel zueinander in vertikaler Richtung, also längs der dritten Raumrichtung angeordnet. Jede Antennenstruktur 14, 16 besitzt eine eigene Richtcharakteristik oder Keule, die z. B. durch die übliche - 3 dB Grenze definiert ist. Für Orte innerhalb dieser Grenze sind Signalamplituden entsprechend größer als die Hälfte der maximalen Signalamplitude.

Die erste Antennenstruktur 14 besteht aus mehreren Elementen, von denen in der Fig. 2 exemplarisch zwei Elemente 14.1, 14.2 dargestellt sind und die durch Laufzeitglieder so miteinander verschaltet sind, dass die Empfangscharakteristik nach oben zeigt. In der Praxis wird man innerhalb einer Antennenstruktur, zum Beispiel innerhalb der Antennenstruktur 14 mehr als zwei Elemente 14.1, 14.2 vorsehen, weil sich die Bündelung, also die Richtwirkung der Antennenstruktur, mit zunehmender Zahl von Elementen verstärkt.

Fig. 2a zeigt schematisch eine Antennenstruktur 14 mit acht Elementen 14.1, 14.2, ... , 14.8 mit zugeordneten Laufzeitgliedern 15.1, 15.2, ... , 15.8. Die Laufzeitglieder können zum Beispiel durch verschieden lange, in ein Antennensubstrat integrierte Leitungsstücke realisiert werden.

Eine wie in der Fig. 2 aufwärts weisende Hauptrichtung 20 ergibt sich bei einer solchen Anordnung dadurch, dass das Laufzeitglied 15.1 einen längeren Signalpfad realisiert als das Laufzeitglied 15.2, dieses einen längeren Signalpfad realisiert als das Laufzeitglied 15.3 und so weiter. Die jeweils unterschiedlich verzögerten Signale werden in einer Leitung 28 summiert, die das Summensignal einer weiteren Auswertung zuführt. Durch die Baumstruktur der Verbindungen der Elemente 14.1, 14.2, ..., 14.8 mit der Leitung 28 sind die Signalwege ansonsten gleich lang, so dass aus der Hauptrichtung 20 einlaufende Signale jeweils von den Elementen 14.1, 14.2, ..., 14.8 empfangen werden und resultierende Signalamplituden durch die gemeinsame Leitung 28 mit gleicher Phase summiert werden. Die aus anderen Richtungen einlaufenden Signale werden zwar ebenfalls beim Eintritt in die gemeinsame Leitung 28 summiert, die einzelnen Summanden treten aber nicht mit gleicher Phase auf, so dass sich einzelne Summanden auch gegenseitig auslöschen können. Das Summensignal ist daher nur für die Hauptrichtung 20 maximal, woraus sich die gewünschte Richtcharakteristik ergibt. Von der Horizontalen abweichende Richtcharakteristiken (Hauptrichtungen) können auch auf andere Weise erzeugt werden. Eine Ausgestaltung, bei der mehrere Elemente 14.1, 14.2, ... ohne Laufzeitglieder in einer Reihe angeordnet sind und bei der die Reihe einen Winkel mit der z-Achse bildet, liefert ebenfalls eine von der Horizontalen abweichende Richtcharakteristik.

Entsprechend besteht die zweite Antennenstruktur 16 aus mehreren Elementen 16.1, 16.2 und gegebenenfalls weiteren Elementen, die durch Laufzeitglieder so miteinander verschaltet sind, dass die Empfangsrichtcharakteristik eine andere Richtung besitzt. In der Ausgestaltung der Fig. 2 zeigt sie nach unten.

In der Figur 2 sind Hauptrichtungen 18, 20 solcher Keulen durch Pfeile dargestellt, die damit jeweils auch eine Richtcharakteristik oder Keule repräsentieren. Beide Richtcharakteristiken 18, 20 weisen jeweils eine Komponente 22, 24 auf, die in die zweite Raumrichtung x, also in Richtung der Längsachse des Kraftfahrzeugs 10 vor das Kraftfahrzeug 10, weist.

Dabei unterscheiden sich die beiden Richtcharakteristiken 18, 20 bei der Ausgestaltung nach der Figur 2 in der dritten Raumrichtung z voneinander, wobei die z-Richtung nicht in der x, y-Ebene liegt, die durch die erste Raumrichtung x und die zweite Raumrichtung y aufgespannt wird.

Im Fall der Fig. 2 ergibt sich der Unterschied durch verschiedene Winkelrichtungen von ansonsten gleichen Keulen. Alternativ kann ein Unterschied auch durch unterschiedliche Keulen oder durch Kombinationen unterschiedlicher Keulen und Winkelrichtungen erzeugt werden.

Aufgrund der unterschiedlichen vertikalen Charakteristik kann ein Objekt von beiden Antennen mit unterschiedlichen Amplituden gesehen werden. Durch Verrechnung der Amplitudenwerte (z.B. durch Bildung und Verwendung von Amplitudendifferenzen oder Quotienten von Amplituden) kann auf die vertikale Position des Objektes geschlossen werden.

Ein bevorzugtes Auswerteverfahren besteht in der separaten Bildung des komplexen Spektrums der Signale der beiden Antennenstrukturen 14, 16. Aus einem Vergleich der Amplitudengänge und Phasengänge der komplexen Spektren beider Signale beider Antennenstrukturen 14, 16 wird dann Abstand, Elevation und Azimut eines Objektes berechnet. Für diese Auswertung werden die Signale beider Antennenstrukturen 14, 16 separat über Leitungen 28, 28.1 und 26, 26.1 an eine Signal-Aufbereitungs und Auswerte-Schaltung 32 des Radarsystems 12 übergeben. Alternativ können Beträge (Amplituden) und Phasen der Radarsignale beider Antennenstrukturen auch durch Summenglieder und Differenzglieder im Hochfrequenzbereich gewonnen werden.

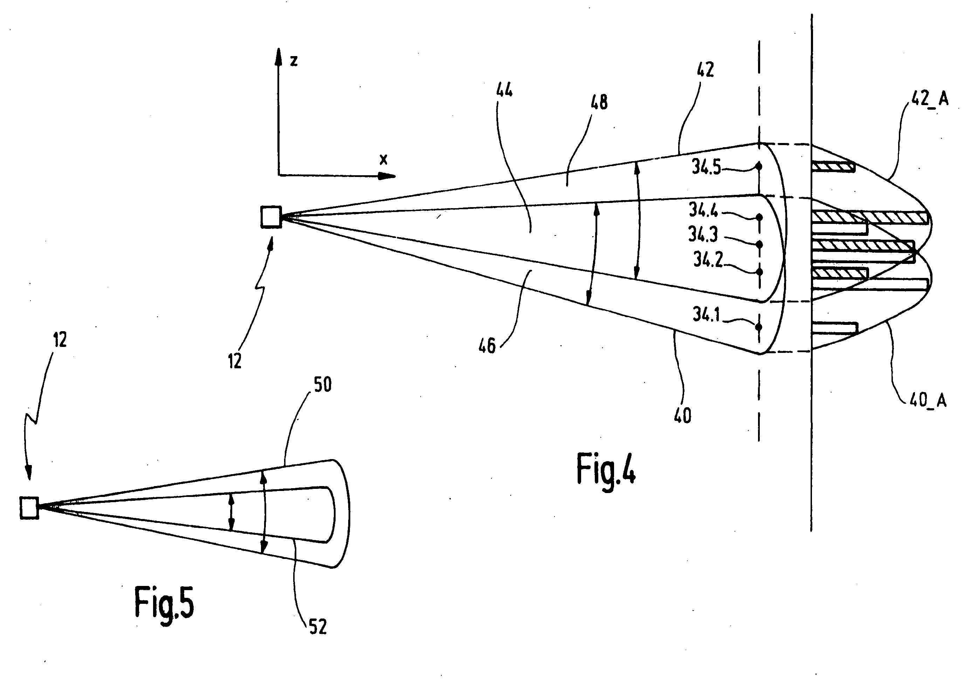

Die Art der Auswertung ist daher nicht entscheidend. Wesentlich ist dagegen, dass das Radarsystem 12 zwei unterschiedlich starke Echos bereitstellt, in deren Unterschied sich eine Elevation eines reflektierenden Objektes abbildet. Einzelheiten dazu werden weiter unten mit Bezug auf die Figuren 4 und 5 erläutert.

Zusätzlich kann mit diesen Verfahren die horizontale Objektposition über die Phasenbeziehung der Signale, die von den beiden Antennenstrukturen 14, 16 kommen, bestimmt werden. Aus der Amplitudenbeziehung der Signale kann die vertikale Objektposition bestimmt werden ohne dass zusätzliche Elemente (Schalter) oder separate Messzyklen erforderlich sind.

Im Folgenden wird zunächst eine Ausgestaltung erläutert, bei der Signale der beiden Antennenstrukturen 14 und 16 über Leitungen 26.2 und 28.2 an einen Summierknoten 30 geführt werden, von dem aus das Hochfrequenz-Summensignal in die Signal-Aufbereitungs und Auswerte-Schaltung 32 des Radarsystems 12 geführt wird. Wie im Folgenden unter Bezug auf die Figur 3 erläutert wird, können auch in den Leitungen 26 und/oder 28 und/oder 26.2 und/oder 28.2 Laufzeitglieder enthalten sein, mit denen eine Signallaufzeit zwischen den Antennenstrukturen 14, 16 und dem Summierknoten 30 verändert wird. Im Gegensatz zu den Laufzeitgliedern 15.1, 15.2, ... , 15.8, die für definierte Verzögerungen der Signale einzelner Elemente 14.1, 14.2, ... , 14.8 einer Antennenstruktur 14 sorgen, verzögern Laufzeitglieder in den Leitungen 26 und/oder 28 und/oder 26.2 und/oder 28.2 die Signale der beiden Antennenstrukturen 14, 16 relativ zueinander.

Figur 3 zeigt eine Ansicht des Radarsystems 12 von oben, also eine Sicht auf die azimutale oder horizontale x, y-Ebene, in der sich ein reflektierendes Objekt 34 befindet. Das Objekt 34 befindet sich in einem Detektionsbereich des Radarsystems 12 in einer azimutalen Winkelposition α. Die azimutale Winkelposition α wird vom Radarsystem 12 z. B. durch ein Monopuls-Phasendifferenz-Verfahren ermittelt. Dabei bezieht sich der Begriff der Phasendifferenz auf Signale, die vom Objekt 34 auf verschiedenen Wegen an den Antennenstrukturen 14 und 16 eintreffen. Da der Weg vom Objekt 34 zur Antennenstruktur 16 um d_s länger ist als der Weg vom Objekt 34 zur Antennenstruktur 14, besteht zwischen den Signalen an den Antennenstrukturen 14 und 16 eine entsprechende Phasendifferenz, wobei die Phase des Signals an der Antennenstruktur 16 der Phase des Signals an der Antennenstruktur 14 nacheilt.

Durch wenigstens ein Laufzeitglied 36 und/oder 38, wird nun das von der Antennenstruktur 14 zum Summierknoten 30 propagierende Signal so verzögert, dass die Signale von den Antennenstrukturen 14 und 16 am Summierknoten 30 mit gleicher Phase eintreffen. Daher findet am Summierknoten 30 eine konstruktive Interferenz für die Signale statt, die aus einem Winkel α oder einem ganzzahligen Vielfachen dieses Winkels auf die Antennenstrukturen 14, 16 des Radarsystems 12 auftreffen. Für andere Winkel findet dagegen eine abschwächende und im Extremfall auslöschende Interferenz statt, woraus sich die Richtwirkung oder Richtcharakteristik des Radarsystems 12 in der Azimut-Ebene (x, y-Ebene) ergibt.

Durch Verändern der Phasenverschiebungen in den Laufzeitgliedern 36 und/oder 38 kann der Winkel α, bei dem konstruktive Interferenz stattfindet, verändert werden, so dass die Empfangscharakteristik den Detektionsbereich vor dem Radarsensor 12 abschnittsweise auf Objekte abtasten kann.

Figur 4 verdeutlicht, wie sich aus Richtcharakteristiken der Antennenstrukturen 14, 16, die sich in der dritten Raumrichtung (z-Richtung) unterscheiden, Informationen über die Elevation von Objekten im Detektionsbereich des Radarsystems ermitteln lassen. Eine zweite Richtcharakteristik oder Keule 40 ist gegenüber einer ersten Richtcharakteristik oder Keule 42 so geneigt, dass sich ein Überlappungsbereich 44 beider Keulen 40 und 42 ergibt. Wenn beide Keulen gleich breit sind, ergibt sich dann auch ein unterer Bereich 46, der nur durch die zweite Keule 40 abgedeckt wird und ein oberer Bereich 48, der nur durch die erste Keule 42 abgedeckt wird.

Die erste Antennencharakteristik 42 wird z. B. mit der ersten Antennenstruktur 14 aus der Figur 1 erzeugt. Analog wird die zweite Antennencharakteristik 40 mit der zweiten Antennenstruktur 16 aus der Figur 1 erzeugt. Rechts in der Figur 4 sind Verläufe 40_A und 42_A von Amplituden von Antennensignalen qualitativ dargestellt, wie sie sich bei Objekten 34.1, 34.2, 34.3, 34.4, 34.5 ergeben, die sich in ähnlichen Entfernungen mit unterschiedlichen Elevations-Winkeln im Detektionsbereich des Radarsystems 12 befinden.

Die schraffierten Balken stellen jeweils Amplituden dar, wie sie als Folge der ersten Richtcharakteristik oder Keule 42 durch die erste Antennenstruktur 14 erfasst werden. Entsprechend stellen die nichtschraffierten Balken jeweils Amplituden dar, wie sie als Folge der zweiten Richtcharakteristik 40 durch die zweite Antennenstruktur 16 erfasst werden. In jedem Fall werden die Amplituden in der Signal-Aufbereitungs- und Auswerte-Schaltung 32 aus über die Leitungen 26.1 und 28.1 zugeführten Signalen gebildet, die individuelle Informationen der Antennenstrukturen 14, 16 enthalten.

In dem unteren Bereich 46 ruft ein Objekt 34.1 nur eine Amplitude in der zweiten Antennenstruktur 16 hervor. Die Signal-Aufbereitungs- und Auswerte-Schaltung 32 aus der Figur 2 folgert daraus, dass sich das Objekt 34.1 von seinem Elevations-Winkel her in dem unteren Bereich 46 befindet. Entsprechend ruft ein Objekt 34.5 lediglich eine Amplitude in der ersten Antennenstruktur 14 hervor, so dass die Signal-Aufbereitungs- und Auswerte-Schaltung 32 dem Objekt 34.5 einen entsprechenden Elevations-Winkel zuweisen kann. Im unteren Bereich 46 und im oberen Bereich 48 ist die Winkelauflösung daher durch die Breite der Bereiche 46 und 48 beschränkt.

Eine verbesserte Winkelauflösung ergibt sich im Überlappungsbereich 44. Dort rufen die Objekte 34.2, 34.3 und 34.4 jeweils unterschiedliche Paare von Amplituden in den Antennenstrukturen 14 und 16 hervor. Wie sich aus den zugehörigen Balken in der Figur 4 unmittelbar ergibt, wachsen die nichtschraffierten Balken im Überlappungsbereich 44 von oben nach unten an, während die schraffierten Balken in diesem Bereich von unten nach oben anwachsen. Durch Bildung eines Quotienten von Amplituden der beiden Antennenstrukturen 14 und 16 kann dadurch im Überlappungsbereich 44 ein Elevations-Winkel für Objekte 34.2, 34.3, 34.4 mit einer verbesserten Auflösung bestimmt werden.

Für die Realisierung der Erfindung ist es dabei nicht unbedingt erforderlich, dass sich die Richtcharakteristiken der Antennenstrukturen 14 und 16 in ihrer Hauptrichtung von einander unterscheiden. Stattdessen können Winkelinformationen auch mit wenigstens zwei Richtcharakteristiken 50, 52 ermittelt werden, die sich in der dritten Raumrichtung überlappen und dabei unterschiedlich breit sind, wobei ihre Hauptrichtung gleich oder verschieden sein kann. Solche Richtcharakteristiken sind schematisch in der Fig. 5 dargestellt.

## Patentansprüche

1. Kraftfahrzeug-Radarsystem (12) mit wenigstens zwei Antennenstrukturen (14, 16), die in einer ersten Raumrichtung (y) in einem vorbestimmten Abstand (d) voneinander angeordnet sind und von denen jede eine Richtcharakteristik (18, 20; 40, 42; 50, 52) mit einer in eine zweite Raumrichtung (x) weisenden Komponente (24, 22) besitzt, wobei sich wenigstens zwei der Richtcharakteristiken (18, 20; 40, 42; 50, 52) der wenigstens zwei Antennenstrukturen (14, 16) in einer dritten Raumrichtung (z) voneinander unterscheiden, die (z) nicht in einer Ebene liegt, in der die erste Raumrichtung (y) und die zweite Raumrichtung (x) liegen, **dadurch gekennzeichnet, dass** das Radarsystem (12) eine azimutale Winkelposition und/oder horizontale Ausdehnung eines Objektes (34), das sich in einem Detektionsbereich des Radarsystems (12) befindet, durch eine Bestimmung einer Phasendifferenz von Signalen der Antennenstrukturen (14, 16) ermittelt, und dass das Radarsystem (12) eine Elevation und/oder vertikale Ausdehnung eines Objektes (34), das sich in einem Detektionsbereich des Radarsystems (12) befindet, durch eine Bewertung von Amplituden von Signalen der Antennenstrukturen (14, 16) ermittelt.

2. Radarsystem (12) nach Anspruch 1, **dadurch gekennzeichnet, dass** die wenigstens zwei Richtcharakteristiken (50, 52) in der dritten Raumrichtung (z) unterschiedlich breit sind.

3. Radarsystem (12) nach Anspruch 1, **dadurch gekennzeichnet, dass** die wenigstens zwei Richtcharakteristiken (18, 20; 40, 42) unterschiedlich gerichtet sind.

4. Radarsystem (12) nach Anspruch 1, **gekennzeichnet durch** eine Kombination der Merkmale der Ansprüche 2 und 3.

5. Radarsystem (12) nach Anspruch 3 oder 4, **dadurch gekennzeichnet, dass** zwischen einzelnen Elementen (14.1, 14.2, ... , 14.8) wenigstens einer Antennenstruktur (14) und einer Signal-Aufbereitungs- und Auswerte-Schaltung (32) des Radarsystems (12) Laufzeitglieder (15.1, 15.2, ... , 15.8) angeordnet sind, die eine unterschiedliche Richtung der Richtcharakteristiken (18, 20; 40, 42) bewirken.

6. Radarsystem (12) nach einem der vorhergehenden Ansprüche, **dadurch gekennzeichnet, dass** sich die unterschiedlichen Richtcharakteristiken (18, 20; 40, 42; 50, 52) überlappen.

7. Betriebsverfahren eines Kraftfahrzeug-Radarsystems (12) mit wenigstens zwei Antennenstrukturen (14, 16), die in einer ersten Raumrichtung (y) in einem vorbestimmten Abstand (d) voneinander angeordnet sind und von denen jede eine Richtcharakteristik (18, 20; 40, 42; 50, 52) mit einer in eine zweite Raumrichtung (x) weisenden Komponente (24, 22) besitzt, wobei die wenigstens zwei Richtcharakteristiken (18, 20; 40, 42; 50, 52) so erzeugt werden, dass sie sich in einer dritten Raumrichtung (z) voneinander unterscheiden, wobei die dritte Raumrichtung (z) nicht in einer Ebene liegt, in der die erste Raumrichtung (y) und die zweite Raumrichtung (z) liegen, **dadurch gekennzeichnet, dass** eine azimutale Winkelposition und/oder horizontale Ausdehnung eines Objektes (34), das sich in einem Detektionsbereich des Radarsystems (12) befindet, durch eine Bestimmung einer Phasendifferenz von Signalen der Antennenstrukturen (14, 16) ermittelt wird, und dass eine Elevation und/oder vertikale Ausdehnung eines Objektes (34), das sich in einem Detektionsbereich des Radarsystems (12) befindet, durch eine Bewertung von Amplituden von Signalen der Antennenstrukturen (14, 16) ermittelt wird.

## Claims

1. Motor-vehicle radar system (12) having at least two antenna structures (14, 16), which are arranged at a predetermined distance (d) from one another in a first spatial direction (y), and each of which has a directional characteristic (18, 20; 40, 42; 50, 52) with a component (24, 22) which points in a second spatial direction (x), wherein at least two of the directional characteristics (18, 20; 40, 42; 50, 52) of the at least two antenna structures (14, 16) differ from one another in a third spatial direction (z), which (z) does not lie on a plane on which the first spatial direction (y) and the second spatial direction (x) lie, **characterized in that** the radar system (12) determines an azimuth angle position and/or a horizontal extent of an object (34), which is located in a detection area of the radar system (12), by determining a phase difference between signals of the antenna structures (14, 16), and **in that** the radar system (12) determines an elevation and/or vertical extent of an object (34), which is located in a detection area of the radar system (12), by evaluation of amplitudes of signals of the antenna structures (14, 16).

2. Radar system (12) according to Claim 1, **characterized in that** the at least two directional characteristics (50, 52) have different widths in the third spatial direction (z).

3. Radar system (12) according to Claim 1, **characterized in that** the at least two directional characteristics (18, 20; 40, 42) point in different directions.

4. Radar system (12) according to Claim 1, **characterized by** a combination of the features of Claims 2 and 3.

5. Radar system (12) according to Claim 3 or 4, **characterized in that** delay elements (15.1, 15.2, ..., 15.8) are arranged between individual elements (14.1, 14.2, ..., 14.8) of at least one antenna structure (14) and a signal preprocessing and evaluation circuit (32) of the radar system (12), which delay elements (15.1, 15.2, ..., 15.8) result in the directional characteristics (18, 20; 40, 42) pointing in different directions.

6. Radar system (12) according to one of the preceding claims, **characterized in that** the different directional characteristics (18, 20; 40, 42; 50, 52) overlap.

7. Operating method for a motor-vehicle radar system (12) having at least two antenna structures (14, 16) which are arranged at a predetermined distance (d) from one another in a first spatial direction (y), and each of which has a directional characteristic (18, 20; 40, 42; 50, 52) with a component (24, 22) which points in a second spatial direction (x), wherein the at least two directional characteristics (18, 20; 40, 42; 50, 52) are produced such that they differ from one another in a third spatial direction (z), wherein the third spatial direction (z) does not lie on a plane on which the first spatial direction (y) and the second spatial direction (z), **characterized in that** an azimuth angle position and/or horizontal extent of an object (34), which is located in a detection area of the radar system (12) is determined by determining a phase difference between signals of the antenna structures (14, 16), and **in that** an elevation and/or vertical extent of an object (34), which is located in a detection area of the radar system (12), is determined by evaluation of amplitudes of signals of the antenna structures (14, 16).

## Revendications

1. Système radar de véhicule automobile (12) comprenant au moins deux structures d'antenne (14, 16) qui sont disposées dans une première direction spatiale (y) à un écart (d) prédéfini l'une par rapport à l'autre et qui possèdent chacune une caractéristique directionnelle (18, 20 ; 40, 42 ; 50, 52) avec une composante (24, 22) orientée dans une deuxième direction spatiale (x), au moins deux des caractéristiques directionnelles (18, 20 ; 40, 42 ; 50, 52) des au moins deux structures d'antenne (14, 16) se différentiant l'une de l'autre dans une troisième direction spatiale (z), laquelle (z) ne se trouve pas dans un plan dans lequel se trouvent la première direction spatiale (y) et la deuxième direction spatiale (x), **caractérisé en ce que** le système radar (12) détermine une position angulaire azimutale et/ou une expansion horizontale d'un objet (34) qui se trouve dans une zone de détection du système radar (12) par une détermination d'une différence de phase des signaux des structures d'antenne (14, 16) et que le système radar (12) détermine une élévation et/ou une expansion verticale d'un objet (34) qui se trouve dans une zone de détection du système radar (12) par une évaluation des amplitudes des signaux des structures d'antenne (14, 16).

2. Système radar (12) selon la revendication 1, **caractérisé en ce que** les au moins deux caractéristiques directionnelles (50, 52) ont des largeurs différentes dans la troisième direction spatiale (z).

3. Système radar (12) selon la revendication 1, **caractérisé en ce que** les au moins deux caractéristiques directionnelles (40, 42) ont des orientations différentes.

4. Système radar (12) selon la revendication 1, **caractérisé par** une combinaison des caractéristiques des revendications 2 et 3.

5. Système radar (12) selon la revendication 3 ou 4, **caractérisé en ce qu'**entre les éléments individuels (14.1, 14.2, ..., 14.8) d'au moins une structure d'antenne (14) et un circuit de conditionnement et d'interprétation des signaux (32) du système radar (12) sont disposés des lignes à retard (15.1, 15.2, ..., 15.8) qui ont pour effet une direction différente des caractéristiques directionnelles (18, 20 ; 40, 42).

6. Système radar (12) selon l'une des revendications précédentes, **caractérisé en ce que** les différentes caractéristiques directionnelles (18, 20 ; 40, 42 ; 50, 52) se chevauchent.

7. Procédé d'exploitation d'un système radar de véhicule automobile (12) comprenant au moins deux structures d'antenne (14, 16) qui sont disposées dans une première direction spatiale (y) à un écart (d) prédéfini l'une par rapport à l'autre et qui possèdent chacune une caractéristique directionnelle (18, 20 ; 40, 42 ; 50, 52) avec une composante (24, 22) orientée dans une deuxième direction spatiale (x), les au moins deux caractéristiques directionnelles (18, 20 ; 40, 42 ; 50, 52) étant générées de telle sorte qu'elles se différentient l'une de l'autre dans une troisième direction spatiale (z), la troisième direction spatiale (z) ne se trouvant pas dans un plan dans lequel se trouvent la première direction spatiale (y) et la deuxième direction spatiale (x), **caractérisé en ce qu'**une position angulaire azimutale et/ou une expansion horizontale d'un objet (34) qui se trouve dans une zone de détection du système radar (12) est déterminée par une détermination d'une différence de phase des signaux des structures d'antenne (14, 16) et qu'une élévation et/ou une expansion verticale d'un objet (34) qui se trouve dans une zone de détection du système radar (12) est déterminée par une évaluation des amplitudes des signaux des structures d'antenne (14, 16).
